# EUROPEAN PATENT SPECIFICATION

(11) **EP 1 419 619 B1**
(45) Date of publication and mention of the grant of the patent: **07.11.2007**
(21) Application number: 02767406.8
(22) Date of filing: 20.08.2002
(51) Int. Cl.: H04L 12/28, H04L 29/08

(54) **METHOD FOR MANAGING NETWORK COMPRISING A BRIDGE BETWEEN HAVI CLUSTERS**
VERFAHREN ZUR ÜBERWALTUNG EINES NETZES MIT EINER NETZÜBERGANGSEINRICHTUNG ZWISCHEN ZWEI HAVI-NETZWERKEN
PROCEDE DE GESTION DE RESEAU COMPRENANT UN PONT ENTRE DEUX GRAPPES

(30) Priority: 22.08.2001 EP 01402206
(43) Date of publication of application: 19.05.2004
(73) Proprietor: Thomson Licensing, 92100 Boulogne-Billancourt (FR)
(72) Inventor: HENRY, Jean-Baptiste, F-35520 Melesse (FR)
(74) Representative: Le Dantec, Claude
(86) International application number: PCT/EP2002/009290
(87) International publication number: WO 2003/019863

(56) References cited:
- EP-A- 0 933 900
- EP-A- 1 058 422
- EP-A- 1 058 427
- WO-A-01/19032
- FR-A- 2 786 355

## Description

The Home Audio Video interoperability (HAVi) specification was developed by a number of consumer electronics companies to permit interconnection of audio video devices in a home environment, using IEEE 1394 serial bus technology. The current specification (versions 1.1, available from HAVi, Inc.2694 Bishop Drive, Suite 275 San Ramon, CA 94583, USA) has not been designed to include the notion of bridging several HAVi networks.

Other documents to which reference will be made in what follows are the IEEE 1394-2000 standard for a serial bus, available from IEEE, as well as IEC 61883.1, which specifies a digital interface for audio and video devices using the IEEE 1394 standard. The IEC 61883.1 document is available from the International Electrotechnical Commission.

Document EP1058422 entitled "methods for bridging a HAVI sub-network and a UPnP sub-network and device for implementing said methods" is presenting the bridging of two different sub-networks.

Document WO01/19032 entitled "clustered networked devices" is related to virtual 1394 plugs to map IEEE1394 on wireless and is closely linked to the low level layers.

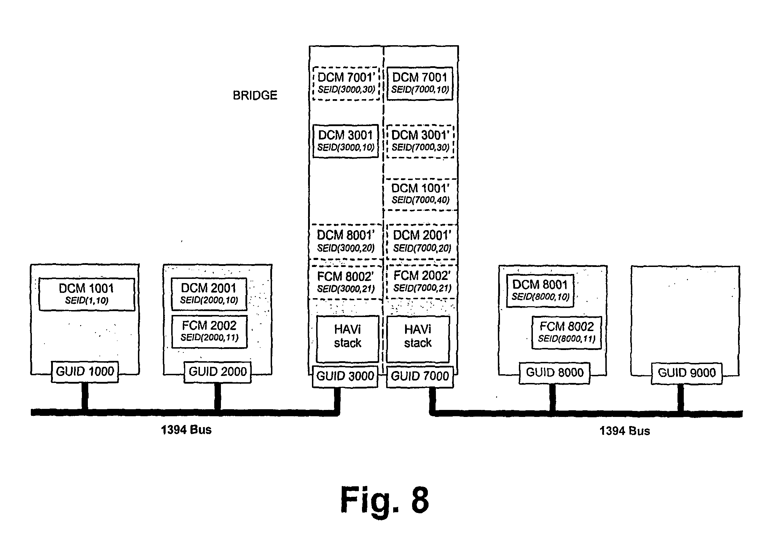

One method for bridging two HAVi networks is based on a Software Element proxy approach. Figure 8 is an example of a network formed by two HAVi networks linked by a bridge device. Devices and sub-devices or functions are represented by software elements, called respectively Device Control Modules (DCMs) and Functional Component Modules (FCMs)

The HAVi device discovery process is based on 'GUID' recognition on the IEEE 1394 bus. GUID stands for global unique identifier. A GUID uniquely identifies an IEEE 1394 device.

The devices on one side of the bridge will not be recognized by devices on the other side, because they are not visible at the IEEE 1394 level. A controller on one side will not be able to use a target on the other side. The bridge device builds representations of the DCMs and FCMs of one side to expose them as DCMs and FCMs on the other side, as proxy elements of the real Software Element they are representing.

In figure 8, real DCMs and FCMs are represented with their SEID (Software Element ID). The SEID is the combination of the GUID (an example being indicated at the bottom of each device) and of a number unique inside this device.

Those DCMs and FCMs are represented on the other side of the bridge by proxy SEs. They are shown with dashed lines to differentiate them from real SEs. There is one proxy SE for each real DCM and FCM. A controlling application can control real target devices behind the bridge through its proxy SEs.

To build a stream, a HAVi application uses a software element local to the application's host device, called the Stream Manager. Some parameters given by the application to the Stream Manager are the 'FcmPlug' data structures, one for the sink FCM and/or one for the source FCM (either both or only one, respectively for a point-to-point or a broadcast stream). This 'FcmPlug' parameter is a structure containing the 'Targetld' parameter, which contains the GUID of the target device (the real device containing the function represented by this FCM).

The problem is that the Stream Manager uses this GUID to establish the IEEE 1394 connection, following the IEC 61883.1 protocol. If the target device of the source or the sink (or both) is behind the bridge, the Stream Manager cannot see this GUID, and so cannot establish the connection.

The object of the invention is a method for managing a network comprising a bridge device (AB, resp. BC), said bridge device comprising a first portal connected to a first HAVi cluster (A, resp. B) and a second portal connected to a second cluster (B, resp. C), characterized by the steps of:
representing, by each portal, DCM software elements and FCM software elements present on the portal's cluster, by proxy DCM software elements and proxy FCM software elements, wherein each proxy software element is represented on the portal's cluster using a software element identifier (SEID) based on the global unique identifier (GUID) of the portal comprising the software elements;
maintaining, in said bridge device, a table of correspondence between software element identifiers of proxy software elements and the software elements they represent wherein the TargetlD data structure of a proxy FCM, respectively proxy DCM software element comprises the global unique identifier of the portal containing this proxy FCM, respectively proxy DCM software element.

According to a specific embodiment an Fcm::GetDcmSeid function call made to a proxy FCM software element returns the software element identifier of the proxy DCM containing the proxy FCM.

According to a specific embodiment, a HUID data structure of a proxy DCM or FCM software element comprises a global unique identifier of the portal containing this proxy DCM or FCM software element.

According to a specific embodiment, a Dcm::GetFcmSeidList function call made to a proxy DCM software element returns the software element identifiers of the proxy FCM contained in the proxy DCM.

According to a specific embodiment, Fcm::GetHuid or Dcm::GetHuid function calls made to proxy FCM or DCM software elements return the corresponding proxy HUID provided by the bridge.

According to a specific embodiment, the method comprises the step of having the bridge forward a function call for a request to a DCM software element to make internal connections from an originating cluster on which the DCM software element is represented by a proxy DCM to a destination cluster, wherein the bridge changes the software element identifiers valid on the originating cluster comprised in the function call to software element identifiers valid on the destination cluster, using the table of correspondence.

According to a specific embodiment, the proxy DCMs and proxy FCMs are respectively declared as DCM_NON61883 and FCM_NON61883.

According to a specific embodiment, the establishment of a stream by a Stream Manager software element comprises the steps of:
- sending a StreamManager::FlowTo function call to a Stream Manager on the first cluster, wherein the function call requests establishment of a connection between a first FCM software element on the first cluster and a second FCM software element on another cluster;
- having the Stream Manager software element set up a connection between the first FCM software element and the proxy FCM of the second FCM software element;
- instruct a second Stream Manager, part of the bridge, to set up a connection on the second cluster between the proxy FCM software element representing the first FCM software element and the second software element, or a proxy thereof.

According to a specific embodiment, the instruction of the second Stream Manager is triggered by the reception of the bridge of a message on the first cluster indicating that the connection by the first Stream Manager is complete.

According to a specific embodiment, the forwarding by the bridge of the function call for DCM software element internal connection is triggered by the reception of the bridge of a message on the first cluster indicating that the connection by the first Stream Manager is complete.

According to a specific embodiment, the completion of the establishment of a connection on a cluster is indicated by a ConnectionAdded event, this event not being forwarded from one cluster to the other.

According to a specific embodiment, the method comprises the steps of:
- sending a message for dropping a connection made over the bridge to a third Stream Manager on one of the clusters, wherein the third Stream Manager has previously been identified as holding the connection to be dropped;
- having the third Stream Manager drop the corresponding connection made on its local cluster;
- having the bridge update a connection identifier in the original drop message using its table of correspondence;
- having the bridge forward the drop message to a fourth Stream Manager on the other cluster, wherein the Stream Manager has been identified through the update.

According to a specific embodiment, the method comprises the steps of:
- sending, from one cluster, a message for dropping a connection made over the bridge to a third Stream Manager (53) in a portal, wherein the third Stream Manager (53) has previously been identified as holding the connection to be dropped;
- having the bridge update a connection identifier in the original drop message using its table of correspondence;
- having the bridge (BC) forward the drop message to a fourth Stream Manager on the other cluster (C), wherein the Stream Manager has been identified through the update;
- having the fourth Stream Manager trigger the dropping of the connection on both clusters.

The invention also concerns a bridge device for connecting a first device cluster to a second device cluster, the device comprising a first portal for connection to the first cluster and a second portal for connection to the second cluster, the bridge being adapted to representing elements on a cluster through proxy elements visible on another cluster, characterized in that it further comprises means for generating data structures descriptive of the proxy elements, wherein the data structures comprise at least one identifier of the bridge or portal for replacing an identifier of the original data structure of the original element represented by the proxy element.

According to an embodiment of the invention, the bridge device further comprises means for analyzing requests for data structures received from an element on the first cluster addressed to an element of the second cluster, said element of the second cluster being represented by a proxy element on the first cluster, and for the selective forwarding of a request to the element of the second cluster or responding to the request in lieu of the element of the second cluster, the selective forwarding or responding being responsive to an element identifier type present in the requested data structure.

According to an embodiment of the invention, the bridge device further comprises means for detecting a new connection between an element of a device connected to one cluster and a proxy element visible on the one cluster, and in response to the detection, triggering establishment of a connection, on another cluster, on the path to the element represented by the proxy element.

Other characteristics and advantages of the invention will appear through the description of a non-restrictive embodiment of the invention, explained with the help of the enclosed figures among which:
Figures 1 to 3 are block diagrams of a same communication network comprising two bridges, at different stages of the establishment of a stream between two devices.
Figures 4 to 7 are block diagrams of the network of figures 1 to 3, at different stages during the closing of a stream.
Figure 8, already described, is an example of two HAVi networks linked by a bridge device.

A HAVi network may comprise four different types of devices. These types differ in their capability of running the software elements of the HAVi architecture: Full Audio/Video devices (FAV), Intermediate AudioNideo devices (IAV), Base AudioNideo devices (BAV) and Legacy Audio/Video devices (LAV).
Each device is represented by a software element called a Device Control Module, or DCM. Each DCM may contain zero or more Functional Component Modules (FCMs). For example, a VCR device may incorporate a Tuner FCM and a VCR FCM proper. A number of Application Programmable Interfaces (APls) for Software Elements are defined by the HAVi specification.
In summary, a FAV device contains a complete set of HAVi Software Elements, while a LAV has none. FAV and IAV can run their own DCMs, while BAV and LAV cannot: DCMs and FCMs for these last two devices have to be run by FAV or IAV devices. Software Elements register with another element, local to their device, called a Registry. Knowledge of the resources available on the cluster may be achieved by querying the different registries on the cluster.
Physical devices are identified by the Global Unique IDentifier, or GUID, as mentioned in the introduction. Software elements are referenced by a Software Element IDentifier, or SEID, which comprises the GUID of the Software Element's host device, as well as an additional identifier, unique within the host device.
Stream establishment is carried out by a Software Element called 'Stream Manager' (SM). The Stream Manager acts upon reception of a function call from, for example, an application. It establishes a stream type connection, for example of the IEC 61883.1 type, by first internally configuring the source and sink devices (setting stream types and transmission formats, attaching functional component (FCM) plugs and device (DCM) plugs), reserving the IEEE 1394 channel and bandwidth resources and updating the IEC 61883.1 plug registers.

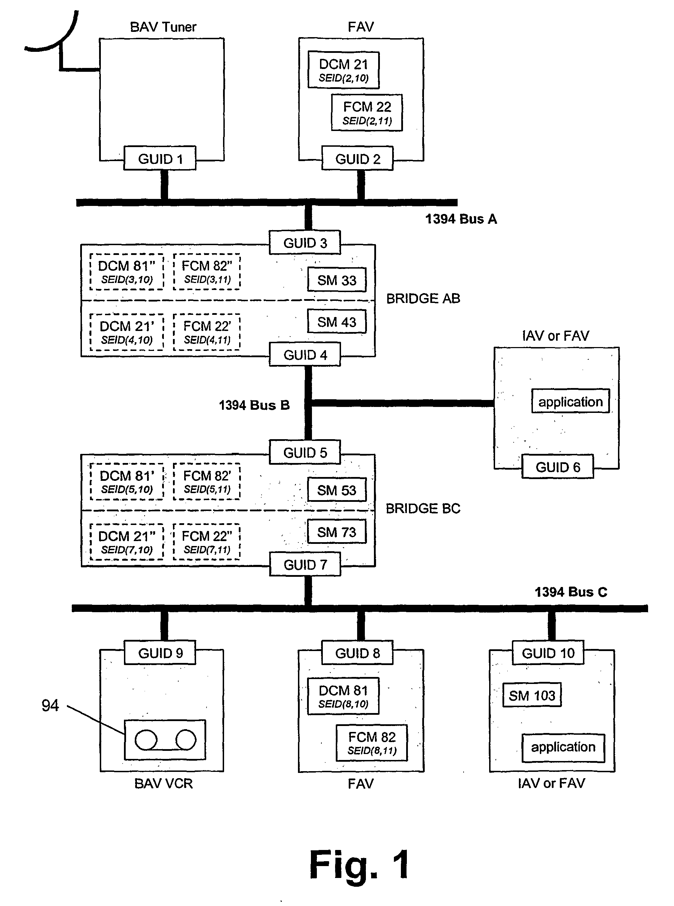

For the readability of the figures, only DCMs and FCMs and other Software Elements useful regarding the stream set-up will be shown on the figures 1 to 6.
The network of figure 1 comprises three IEEE 1394 busses A, B and C, linked through two bridges AB and BC. The three busses and the devices which are connected to the busses form three distinct HAVi clusters. Each device's GUID is indicated on the figure. In what follows, each device will be referenced by its GUID. If the GUID of a device is 'X', then the reference for a DCM in the device will be 'X1' and that of an FCM 'X2'. A Stream Manager will have reference 'X3'. In the case of the present example, since only DCMs and FCMs involved in the stream set-up are shown, there are at maximum one DCM and one FCM shown for each device. The reference for proxies will be that of the Software Elements they represent, to which one or more apostrophes will be added to indicate the remoteness of the proxy compared to the original Software Element. For example, if a Software Element's reference is X, the proxy of the bridge connected to the same bus will be X', and that of the next bridge X". Proxy Software Elements will also be drawn as boxes with dashed lines, in order to distinguish them from the original Software Elements.
The notation for a SEID will be ('GUID', n), where 'GUID' is the GUID of the host device and n represents the additional identifier within the host.

Bus A is connected to a BAV Tuner 1 (GUID = 1) connected to an antenna (not referenced). The DCM and FCM Software Elements 21, resp. 22, representing the tuner are hosted by a FAV device 2, also connected to bus A. A bridge AB is also connected to bus A. The bridge's portal on the side of bus A is referenced 3. It comprises a Stream Manager 33, as well as two proxy DCM and FCM 81" and 82", representing a DCM and an FCM of device 8 on bus C.
Bus B is connected to portals of bridges AB and BC, referenced 4 and 5 respectively, as well as to a IAV or FAV device 6 comprising an application, for example a user interface. Portal 4 comprises the proxy devices DCM 21' and FCM 22', representing the Tuner DCM and FCM of device 2. Portal 4 also contains a Stream Manager 43, since it has to participate in the establishment or cancellation of streams, just as its peer portal. Similarly, portal 5 contains a Stream Manager 53, as well as DCM 81' and FCM 82'.
Bus C is connected to portal 7 of bridge BC, and comprises Stream Manager 73 as well as proxies DCM 21" and FCM22". Moreover, a BAV VCR device is connected to bus C, comprising a VCR function 94. The FAV device 8 hosts the DCM and FCM for the BAV device 9. A IAV or FAV device 10 hosts an application, for example a user interface, and a Stream Manager 103.
The bridges AB and BC comprise memory for building a table in which the bridges hold the SEID and/or GUID identifiers of the software elements for which is constitutes proxies.
References in figures 1 to 6 are the same for the same elements.

The method for building a stream will now be described.

As example, the application of the device 10 wishes to build a stream from the Tuner 1 to the VCR 9, in order to perform a record operation. This application is aware of the VCR 9 through the FCM 21, and is aware of the Tuner 1 through the proxy FCM 22". The SEID identifiers of these two FCMs are available through an appropriate query made to the Registry of device 10.
The application will call the 'StreamManager::FlowTo' function of the Stream Manager 103, in order to request the establishment of the stream. Parameters of this 'FlowTo' call are mainly the 'FcmPlug' data structure of the source and of the sink. These data structures comprise in turn a data structure called 'TargetlD' containing the GUID of the devices hosting the FCMs- or their proxies as will be seen later.

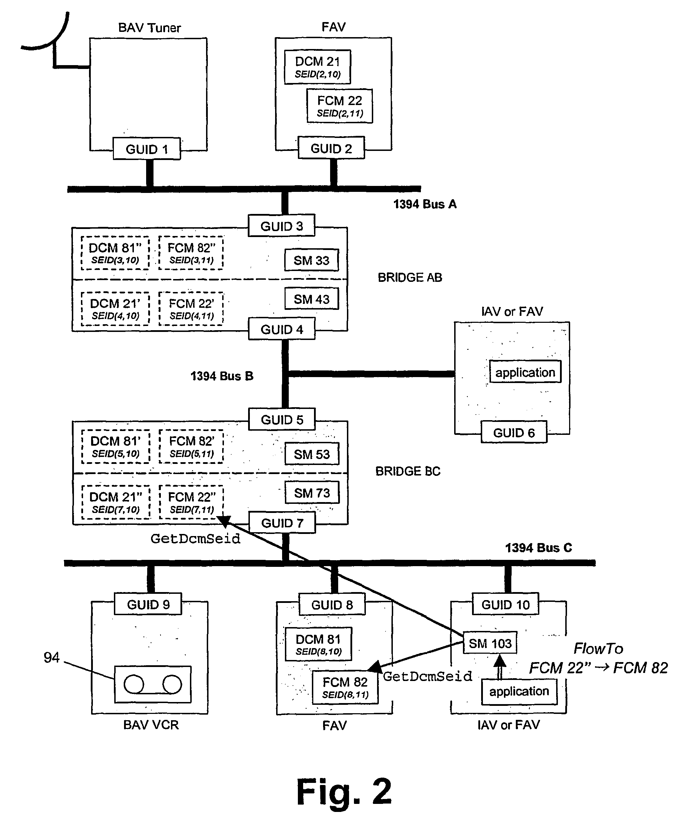

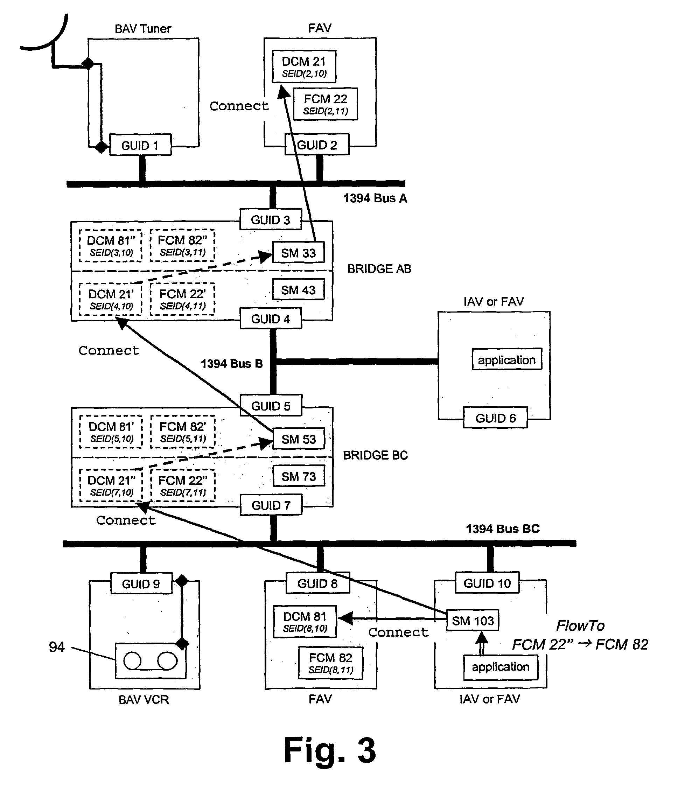

As shown on figure 2, the Stream Manager 103 will request from the FCM 22" the SEID identifier of its associated DCM, via the 'Fcm::GetDcmSeid' call. The proxy FCM 22" does not forward this request to the real FCM 22, because the answer would then be the SEID of DCM 21. The proxy FCM 22" responds to this request by giving back the DCM 21" SEID (here SEID (7,10)). This call will also be sent to the FCM 82, which will send back the SEID of DCM 82.
The portal 7 thus intercepts the 'FCM::GetDcmSeid' call at the level of the proxy FCM. It does not forward it directly towards the real FCM. As will be seen later, a stream on Bus C will be established between FCM 82 and proxy FCM 22" by the Stream Manager 103, thinking that the stream is established between FCM 82 and FCM 22. If the SEID of the real DCM 21 had been returned as answer to the 'FCM::GetDcmSeid' function call, the Stream Manager 103, being on another cluster, would have been in any case unable to process it. Function calls such as 'FCM::GetDcmSeid' which return identifiers for use by the calling Software Element are thus intercepted by the corresponding proxy, and the identifier of the real Software Element replaced by that of its proxy.
The HAVi Unique Identifier (HUID) is used to uniquely identify a DCM, FCM or Application Module. The HUID identifier comprises the TargetlD (modified by the bridge) and a number of other identifiers: 'Interfaceld', 'Vendorld', 'n1Uniqueness', 'n2Assigner'. The 'Interfaceld' and 'Vendorld' of the proxy are the same as those of the original device or functional component represented by the proxy. 'n1Uniqueness' is set to TRUE, and 'n2Assigner' is set to NONE for the DCM and to NONE or DCM for the FCM.
Since the HUID or Targetid of a proxy is changed by the bridge compared to the HUID or Targetld of the device represented by the proxy, in addition to the Fcm::GetDcmSeid message, the following messages should not be forwarded, but answered by the bridge:
Dcm::GetHuid
Dcm::GetFcmSeidList
Fcm::GetHuid.
As shown by figure 3, in order to establish the internal connections within the devices, the Stream Manager 103 makes a 'Dcm::Connect' call on the DCM 21" and on the DCM 81. The DCM 81 will establish the internal connection in the BAV VCR, between the recording sub-unit and the bus connection. The DCM 21" will forward the request to the Stream Manager 53, which is the Stream Manager of the other portal of its bridge, because it knows that this type of call has to be forwarded to the real DCM. Indeed, the 'DCM::Connect' function instructs a DCM to establish the internal connections of a device on the same cluster as the DCM.
According to the HAVi specification, the 'Dcm::Connect' function is reserved for use by a Stream Manager only, and this is why according to the present embodiment, the proxy DCM 21" instructs, through private bridge software, the Stream Manager 53 to carry out this task, instead of directly making this function call itself. Note that DCM 21" is in fact the proxy of DCM 21', and not directly of DCM 21.

The Stream Manager 53 will perform the call to the proxy DCM 21', which will forward it to the Stream Manager 33 in a fashion similar to what has just been said, the latter finally calling the real DCM 21. The DCM 21 will make the internal connection in the BAV Tuner 1, as shown on figure 3.
The DCM::Connect call contains the SEID identifier of the calling Software Element, which initially is the SEID of the Stream Manager 103. Each time a Stream Manager forwards the DCM::Connect call, it replaces the caller identifier by its own SEID.
The DCM::Connect call is a function call which instructs the real DCM 21 to carry out a task. Such a type of message is forwarded by the bridge BC and the bridge AB to the real DCM, taking care that all relevant parameters relating to software element identification (e.g. caller SEID identifier) are modified to be valid on the clusters the message passes on its way to the target software element. In other words, when a bridge receives a message from an entity on one cluster, it does not systematically forward the message as is, but analyzes the nature of the message to determine whether forwarding is allowed or not. If it is allowed, certain parameters in the message may have to be modified to comply with requirements on the new cluster. If the forwarding is not allowed - this is the case when a request for information regarding identification of the Software Element is made - then the bridge responds directly to the caller Software Element, since it already possesses a valid response to that request .

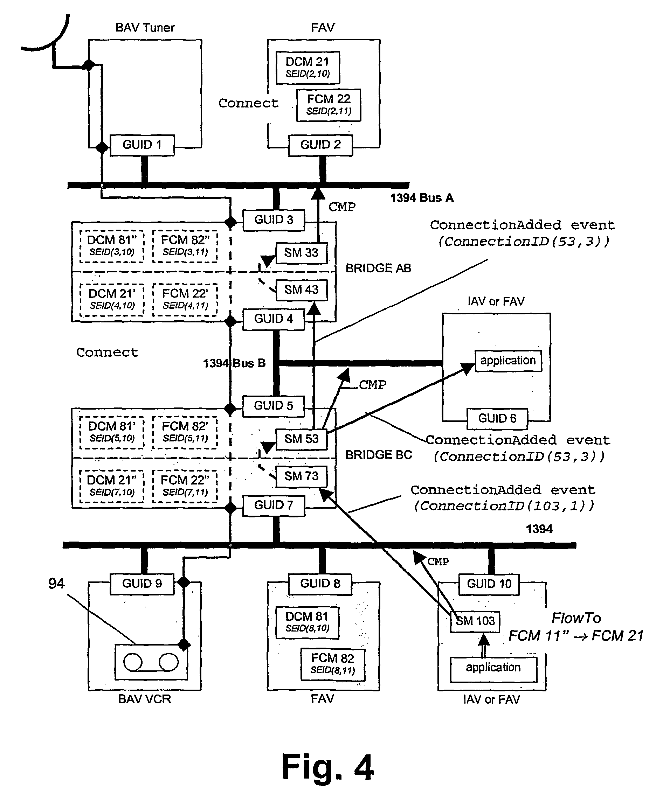

The Stream Managers have now triggered, through the DCMs, the creation of the required internal connections in the source and sink devices (which are according to the present example, devices which do not host these DCMs).
The Stream Manager 103 has now to make the IEEE 1394 connection. The process is shown on figure 4. The Stream Manager 103 will make this connection only for bus C, although it will be led to believe that it will make this connection over the whole network. The Stream Manager 103 retrieves the GUIDs of the source and of the sink devices via the FcmPlug data structures mentioned above, which contain the Targetlds, which contain the GUIDs.
The GUID of the Targetld of the FCM 22" is not the real GUID of the Tuner device 1 but the GUID of the device which hosts the proxy FCM 22" (i.e. GUID 7), since the Stream Manager cannot make directly a IEEE 1394 connection over the two bridges. The proxy FCM 22" thus has its own Targetld attribute: this Targetld is not a copy of the Targetld of the real FCM 22.
According to HAVi, DCMs and FCMs are assigned types. Typically, a DCM or an FCM may be able to handle streams according to the IEC 61883 standard or not. This standard defines the transport of isochronous streams over IEEE 1394. The type of a DCM may thus be DCM_61883 (if IEC 61883 compatible) or DCM_NON61883. The notations are similar for FCMs. Furthermore, according to the HAVi specification, Targetlds are unique in the network, and there may be only one DCM of type DCM_61883 in each device.
The type of the DCM 21" - or of another proxy DCM - cannot be DCM_61883. Indeed, since as has just been explained, the GUID of this DCM 21" is the same as that of its host device (GUID 7), the Targetld of the DCM 21" would be identical to the Targetld of DCM of the portal itself (this DCM not being shown in the figures).
According to the present embodiment, DCMs (respectively FCMs) are declared as being non-compliant with IEC 61883. In this case, HAVi allows for additional parameters to vary in the Targetld, enabling the creation of distinct Targetlds for the proxy software elements.
Another solution would be to allow for other DCM and FCM types specific to the proxy elements (for example the types 'DCM_PROXY' and 'FCM_PROXY'), but this solution would require a modification of the HAVi specification.

The Stream Manager 103 builds a IEEE 1394 connection between the device 7 and the device 9. Once this is done and the Stream Manager 103 believes the stream to have been properly established, it broadcasts a ConnectionAdded event on its cluster.
The Stream Manager 73 receives this ConnectionAdded event. It then calls the StreamManager::GetConnection function on the API of the Stream Manager 103, in order to retrieve more information about this stream (in particular the source FcmPlug and sink FcmPlug). It can then forward this information to the Stream Manager 53 of its peer portal. The Stream Manager 53 then checks the source and sink of this connection, and deduces by internal means that it has to build a IEEE 1394 connection between the FCM 22' and the FCM 82': the bridge device keeps knowledge of the equivalence between proxy and real DCMs/FCMs, and thus knows from the information provided by the Stream Manager 73 between which FCMs a IEEE 1394 connection is to be established. In this example, for the bridge device BC, the real DCMs are DCM 81 on the GUID 7 side and DCM 21' on the GUID 5 side (although this is a proxy DCM, it is seen as real as far as the bridge BC is concerned), and the proxy DCMs are the DCM 21" on the GUID 7 side and the DCM 81' on the GUID 5 side. Moreover, it builds the internal connection inside the bridge device.
When this is done, the Stream Manager 53 broadcasts a new 'ConnectionAdded' event on its HAVi cluster. This new event is not a copy of the one broadcasted by Stream Manager 103, since a number of parameters have to be changed due to the change of cluster.
With reference to the HAVi specification, the 'mgr' field of the 'Connectionld' parameter, indicating the Stream Manager who created the connection, is now the SEID of the Stream Manager 53, and the fields in the 'Connection' structure have been changed according to this cluster (the 'Channel' is not necessarily the same, the 'FcmPlug' data structures for the source and the sink are not referring to FCM 22" and FCM 82 anymore but to FCM 22' and FCM 82', the 'Connectionld' parameter has changed, and so did the 'owner').
The Stream Manager 43 receives the event, calls the 'StreamManager::GetConnection' function to obtain information on the connection and forwards it to its neighbor Stream Manager 33, which deduces that it has to make a IEEE 1394 connection between the DCM 21 and the DCM 82" (same process as above) and an internal connection inside the bridge AB. The Stream Manager 43 finally broadcasts a new 'ConnectionAdded' event on cluster A.
Note that on figure 4, the acronym 'CMP' stands for 'Connection Management Procedure'. This procedure is part of IEC 61883.1, and the arrows marked CMP on figure 4 correspond to messages sent on the IEEE 1394 busses for resource reservation.

As can be seen from the preceding paragraphs, the event message 'ConnectionAdded' is not forwarded directly from one bridge side to the other. Rather, the event triggers on one cluster the sequence of actions which resulted in the event message's reason to be on the other cluster. In other words, the sequence of actions is propagated from cluster to cluster (if required by the stream establishment), the completion of the sequence of actions on one cluster triggering the sequence on the next cluster.

How a stream is to be terminated or 'dropped' will now be described.

As an example, the application on the device having GUID 6 decides to drop the stream which has been established between FCMs 22 and 82.
If this application subscribed to receive the 'ConnectionAdded' events at the proper time, it received the 'Connectionld' of the stream. Otherwise, it previously performed a 'StreamManager::GetGlobalConnectionMap' function, through which it learned of the existence of the connection.
The 'Connectionld' data structure for this particular connection has a 'mgr' field equal to 53, because on this cluster of the HAVi network it was built by the Stream Manager 53.
The 'Connectionld' structure also contains a field labeled 'seq', indicating a sequence number given by Stream manager 53 to the connection, and to which we arbitrarily give a value of '3' for the purpose of the present example. The connection will be identified as the connection (53, 3).
The application performs a'StreamManager::GetConnection' function call to the Stream Manager which holds the stream (here Stream Manager 53) in order to obtain more information about this connection (e.g. the source and the sink).

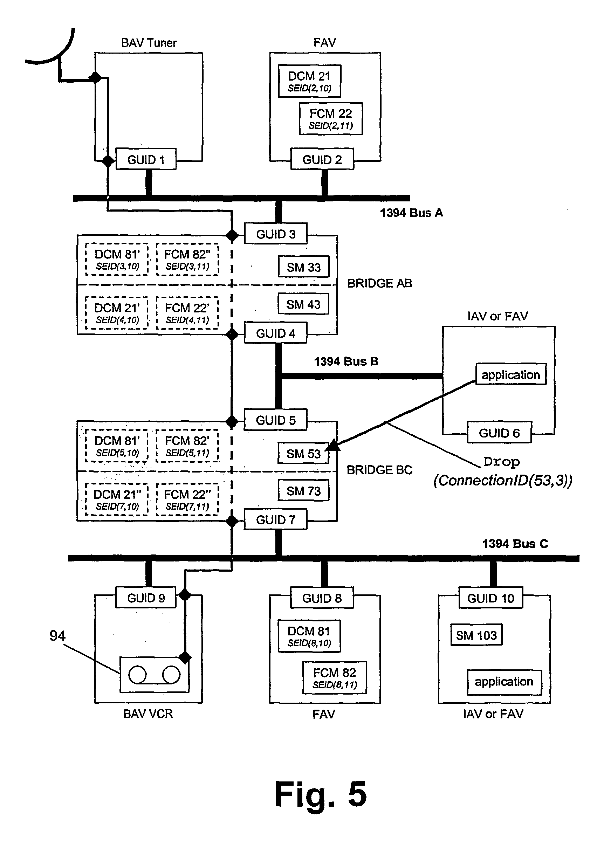

As shown by figure 5, the application performs a 'StreamManager::Drop' call with the Stream Manager 53 with a 'Connectionld' identified by (53,3).

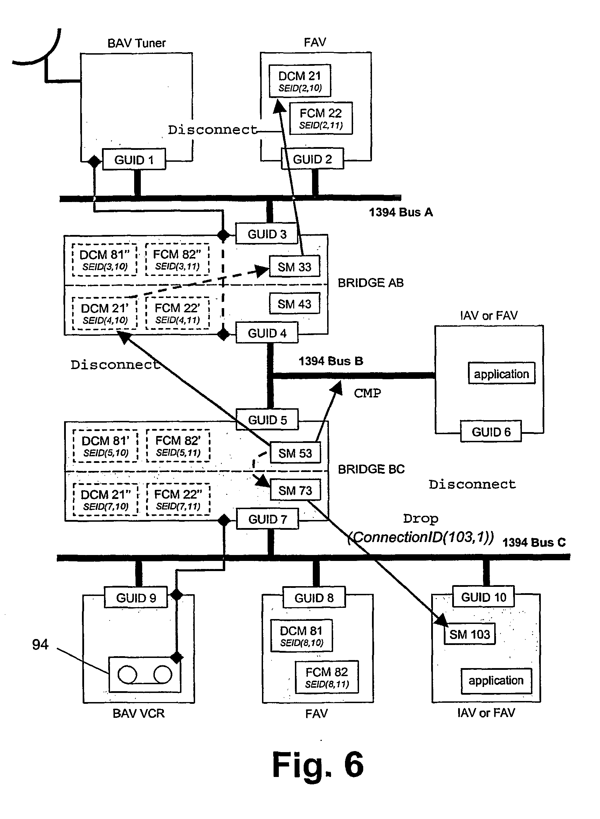

A normal Stream Manager would then send 'Dcm::Disconnect' messages to the two DCMs involved in the connection. According to the present embodiment, the Stream Manager sends such a message only to DCMs which it believes not to be proxies. In other words, if the Stream Manager (which received the 'StreamManager::Drop' message) resides on a bridge, it sends the 'Dcm::Disconnect' message only to DCMs which are not emulated by the bridge it resides on. Only for these DCMs does the Stream Manager know whether they are proxies or not.
As shown on figure 6, the Stream Manager 53 sends a 'Dcm::Disconnect' message to the DCM 21', but not to the DCM 82' since it can derive through the bridge's internal means that this DCM is a proxy DCM. The call received by proxy 21' is forwarded by the proxy DCM to the Stream Manager 33, which forwards it to the DCM 21, and the BAV Tuner 1 internal connection is closed.
Stream Manager 53 closes the IEEE 1394 connection on its cluster and the internal connection of its bridge device.
Finally, in replacement for the missing 'DCM::Disconnect' message, the Stream Manager 53 forwards the drop information to the Stream Manager 73 of its peer portal. The Stream Manager 73 deduces that the Connectionld (53,3) refers in reality to the Connection Id(103,1) held by the Stream Manager 103, and then sends a 'StreamManager::Drop' call to the Stream Manager 103.

The Stream Manager 103 launches the drop process on its cluster, i.e. it sends a 'Dcm::Disconnect' message to the DCM 82. The DCM 82 responds by breaking the internal connection of the BAV VCR 9. Since the Stream Manager 103 - not being a bridge Stream Manager - ignores that DCM 21" is a proxy DCM, it also sends a 'Dcm::Disconnect' message to this proxy. No action by the proxy DCM 21" is required, since this was already handled by Stream Manager 53 on bus B. The Stream Manager 103 then closes the IEEE 1394 connection on its cluster and sends a 'ConnectionDropped' event.
In parallel, the Stream Manager 43 received the 'ConnectionDropped' event from the Stream Manager 53. It forwards it to its co-bridge Stream Manager 33. This one deduces the true Connectionld on its cluster from the Connectionold (53,3), and then launches the drop process, i.e. it closes the IEEE 1394 connection on cluster A and sends a ConnectionDropped event on its cluster (not shown here).

Although the example of figures 2 to 7 concern the establishment and cancellation of a point-to-point connection, the described process may easily be applied to broadcast connections (in and out) and to overlay connections.
Automatic re-establishment of connections after bus reset is done individually on each cluster.

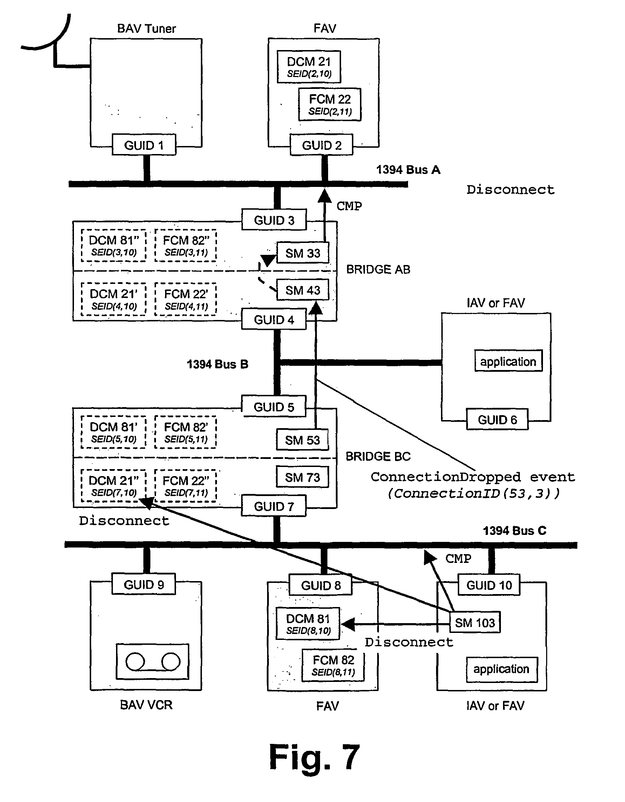

The order of actions as described in the example above may vary. Some variants of the embodiment are given here:
- The Dcm::Connect calls forwarded by a bridge can be made at the same time as the IEEE 1394 connections are established by this bridge, i.e. not when the first Dcm::Connect is forwarded by the proxy DCM (see figure 3) but when the Stream Manager of the bridge receives the ConnectionAdded event.
- The Dcm::Disconnect calls forwarded by a bridge can be made at the same time as the IEEE 1394 disconnection is made by a bridge, i.e. not when the first Dcm::Disconnect is forwarded by the proxy DCM (see figure 6) but when the Stream Manager of the bridge receives the ConnectionDropped event (see figure 7).
- The Dcm::Disconnect calls by the Stream Manager of a bridge (e.g. Stream Manager 53) can be made when the original initiator of the stream (e.g. Stream Manager 103) sends the Dcm::Disconnect messages on its cluster, and this Dcm::Disconnect message is detected by the bridge BC's proxy DCM (e.g. 21"), instead of having the apparent holder of the stream Stream Manager propagate this call.
- The StreamManager::Drop can be forwarded to the original initiator (Stream Manager 103) with no action taken by the intermediate bridges. The original initiator then launches the disconnection process, the propagation of which is then similar to the connection process.

Although the invention has been described in the frame of HAVi, many of the characteristics may be applied within other contexts.

Each bridge comprises memory and interfacing and processing circuits (e.g. a microprocessor), as such well known in the art, for carrying out the described methods. These elements do not appear in the figures.

## Claims

1. Method for managing a network comprising a bridge device (AB, resp. BC), said bridge device comprising a first portal connected to a first HAVi cluster (A, resp. B) and a second portal connected to a second HAVi cluster (B, resp. C), **characterized by** the steps of:
representing, by said first portal, DCM software elements and FCM software elements present on said second cluster, by proxy DCM software elements and proxy FCM software elements, wherein the software element identifier SEID of each proxy software element represented on said first cluster is built based on the global unique identifier, GUID, of the portal comprising the proxy software elements;
representing, by said second portal, DCM software elements and FCM software elements present on said first cluster, by proxy DCM software elements and proxy FCM software elements, wherein the software element identifier, SEID, of each proxy software element represented on said second - cluster is built based on the global unique identifier, GUID, of the portal comprising the proxy software elements;
building, in said bridge device, a table of correspondence between software element identifiers of proxy software elements and the software elements they represent wherein the TargetID data structure of a proxy FCM, respectively proxy DCM software element is built comprising the global unique identifier of the portal containing this proxy FCM, respectively proxy DCM software element.

2. Method according to claim 1, wherein a HAVi unique identifier, HUID, data structure of a proxy DCM or FCM software element is built comprising a global unique identifier of the portal containing this proxy DCM or FCM software element.

3. Method according to one of the claims 1 or 2, wherein a first function call made to a proxy FCM software element returns the software element identifier of the proxy DCM containing the proxy FCM.

4. Method according to one of the claims 1 to 3, wherein a second function call made to a proxy DCM software element returns the software element identifiers of the proxy FCM contained in the proxy DCM.

5. Method according to one of the claims 1 to 4, wherein a third function call made to proxy FCM or DCM software elements return the corresponding proxy HAVi unique identifier, HUID, provided by the bridge.

6. Method according to one of the claims 1 to 5, comprising the step of having the bridge forward a function call for a request to a DCM software element to make internal connections from an originating cluster on which the DCM software element is represented by a proxy DCM to a destination cluster, wherein the bridge changes the software element identifiers valid on the originating cluster comprised in the function call to software element identifiers valid on the destination cluster, using the table of correspondence.

7. Method according to one of the claims 1 to 6, wherein proxy DCMs and proxy FCMs are respectively declared as DCM_NON61883 and FCM_NON61883.

8. Method according to one of the claims 1 to 7, wherein the establishment of a stream by a Stream Manager software element comprises the steps of:
- sending a function call to a Stream Manager (103) on the first cluster (C), wherein the function call requests establishment of a connection between a first FCM software element (82) on the first cluster (C) and a second FCM software element (22) on another cluster (A);
- having the Stream Manager software element set up a connection between the first FCM software element (82) and the proxy FCM (22") of the second FCM software element (22);
- instruct a second Stream Manager (53), part of the bridge (BC), to set up a connection on the second cluster (B) between the proxy FCM software element (FCM82') representing the first FCM software element and the second software element (22), or a proxy (22') thereof.

9. Method according to claim 8, wherein the instruction of the second Stream Manager (53) is triggered by the reception of the bridge (BC) of a message on the first cluster indicating that the connection by the first Stream Manager (103) is complete.

10. Method according to claim 6 and claim 8, wherein the forwarding by the bridge of the function call for DCM software element internal connection - is triggered by the reception of the bridge (BC) of a message on the first cluster indicating that the connection by the first Stream Manager (103) is complete.

11. Method according to one of the claims 8 to 10, wherein the completion of the establishment of a connection on a cluster is indicated by a Connection Added event, this event not being forwarded from one cluster to the other.

12. Method according to one of the claims 8 to 11, comprising the steps of:
- sending a message for dropping a connection made over the bridge to a third Stream Manager (53) on one of the clusters (B), wherein the third Stream Manager (53) has previously been identified as holding the connection to be dropped;
- having the third Stream Manager (53) drop the corresponding connection made on its local cluster;
- having the bridge update a connection identifier in the original drop message using its table of correspondence;
- having the bridge (BC) forward the drop message to a fourth Stream Manager on the other cluster (C), wherein the Stream Manager has been identified through the update.

13. Method according to one of the claims 8 to 11, comprising the steps of:
- sending, from one cluster, a message for dropping a connection made over the bridge to a third Stream Manager (53) in a portal, wherein the third Stream Manager (53) has previously been identified as holding the connection to be dropped;
- having the bridge update a connection identifier in the original drop - message using its table of correspondence;
- having the bridge (BC) forward the drop message to a fourth Stream Manager on the other cluster (C), wherein the Stream Manager has been identified through the update;
- having the fourth Stream Manager trigger the dropping of the connection on both clusters.

14. Bridge device (AB, BC) for connecting a first HAVI device cluster to a second HAVI device cluster, the device comprising a first portal (3, 5) for connection to the first cluster and a second portal for connection to the second cluster (4, 7), the bridge being adapted to representing software elements (21, 22, 81, 82) on one cluster through proxy software elements (21', 21", 22', 22", 81', 81", 82', 82") visible on the other cluster, **characterized in that** it further comprises means for generating data structures descriptive of the proxy software elements, wherein the data structures comprise at least one identifier of the bridge or portal replacing an identifier in the original data structure of the original software element represented by the proxy software element.

15. Device according to claim 14, **characterized in that** it further comprises means for analyzing requests for data structures received from a software element on the first cluster addressed to a software element of the second cluster, said software element of the second cluster being represented by a proxy software element on the first cluster, and for the selective forwarding of a request to the software element of the second cluster or responding to the request in lieu of the software element of the second cluster, the selective forwarding or responding being responsive to a software element identifier type present in the requested data structure.

16. Device according to one of the claims 14 or 15, further comprising means (33, 43, 53, 73) for detecting a new connection between a software - element of a device connected to one cluster and a proxy software element visible on the one cluster, and in response to the detection, triggering establishment of a connection, on another cluster, on the path to the software element represented by the proxy software element.

## Patentansprüche

1. Verfahren zur Verwaltung eines Netzwerks mit einer Brückeneinrichtung (AB bzw. BC), wobei die Brückeneinrichtung ein mit einem ersten HAVi-Cluster (A bzw. B) verbundenes erstes Portal und ein mit einem zweiten HAVi-Cluster (B bzw. C) verbundenes zweites Portal umfaßt, **gekennzeichnet durch** die folgenden Schritte:
das erste Portal repräsentiert DCM-Softwareelemente und FCM-Softwareelemente, die auf dem zweiten Cluster vorliegen, **durch** Proxy-DCM-Softwareelemente und Proxy-FCM-Softwareelemente, wobei die Softwareelementkennung SEID jedes auf dem ersten Cluster repräsentierten Proxy-Softwarelements auf der Basis der globalen eindeutigen Kennung GUID des die Proxy-Softwareelemente umfassenden Portals aufgebaut wird;
das zweite Portal repräsentiert DCM-Softwareelemente und FCM-Softwareelemente, die auf dem ersten Cluster vorliegen, **durch** Proxy-DCM-Softwareelemente und Proxy-FCM-Softwareelemente, wobei die Softwareelementkennung SEID jedes auf dem zweiten Cluster repräsentierten Proxy-Softwarelements auf der Basis der globalen eindeutigen Kennung GUID des die Proxy-Softwareelemente umfassenden Portals aufgebaut wird;
in der Brückeneinrichtung wird eine Korrespondenztabelle zwischen Softwareelementkennungen von Proxy-Softwareelementen und den von ihnen repräsentierten Softwareelementen aufgebaut, wobei die TargetId-Datenstruktur eines Proxy-FCM- bzw. Proxy-DCM-Softwareelements als die globale eindeutige Kennung des dieses Proxy-FCM- bzw. Proxy-DCM-Softwarelement enthaltenden Portals umfassend aufgebaut wird.

2. Verfahren nach Anspruch 1, wobei eine Datenstruktur der eindeutigen HAVi-Kennung HUID eines Proxy-DCM- oder -FCM-Softwareelements als eine globale eindeutige Kennung des dieses Proxy-DCM- oder -FCM-Softwarelement enthaltenden Portals umfassend aufgebaut wird.

3. Verfahren nach einem der Ansprüche 1 oder 2, wobei ein erster Funktionsaufruf an ein Proxy-FCM-Softwareelement die Softwareelementkennung des das Proxy-FCM enthaltenden Proxy-DCM zurückgibt.

4. Verfahren nach einem der Ansprüche 1 bis 3, wobei ein zweiter Funktionsaufruf an ein Proxy-DCM-Softwareelement die Softwareelementkennungen des in dem Proxy-DCM enthaltenden Proxy-FCM zurückgibt.

5. Verfahren nach einem der Ansprüche 1 bis 4, wobei ein dritter Funktionsaufruf Proxy-FCM- oder -DCM-Softwareelemente die entsprechende durch die Brücke bereitgestellte eindeutige HAVi-Kennung HUID zurückgibt.

6. Verfahren nach einem der Ansprüche 1 bis 5 mit dem Schritt des Veranlassens, daß die Brücke einen Funktionsaufruf für eine Anforderung an ein DCM-Softwareelement, interne Verbindungen von einem Ursprungscluster, auf dem das DCM-Softwareelement durch ein Proxy-DCM repräsentiert wird, zu einem Zielcluster herzustellen, weiterleitet, wobei die Brücke die auf dem Ursprungscluster gültigen Softwareelementkennungen, die in dem Funktionsaufruf eingeschlossen sind, unter Verwendung der Korrespondenztabelle in auf dem Zielcluster gültige Softwareelementkennungen umändert.

7. Verfahren nach einem der Ansprüche 1 bis 6, wobei Proxy-DCM und Proxy-FCM jeweils als DCM_NON61883 bzw. FCM_NON61883 deklariert werden.

8. Verfahren nach einem der Ansprüche 1 bis 7, wobei das Herstellen eines Stroms durch ein Streammanager-Softwareelement die folgenden Schritte umfaßt:
- Senden eines Funktionsaufrufs zu einem Streammanager (103) auf dem ersten Cluster (C), wobei der Funktionsaufruf die Herstellung einer Verbindung zwischen einem ersten FCM-Softwareelement (82) auf dem ersten Cluster (C) und einem zweiten FCM-Softwareelement (22) auf einem anderen Cluster (A) anfordert;
- Veranlassen, daß das Streammanager-Softwareelement eine Verbindung zwischen dem ersten FCM-Softwareelement (82) und dem Proxy-FCM (22") des zweiten FCM-Softwareelements (22) aufbaut;
- Anweisen eines zweiten Streammanagers (53), der Teil der Brücke (BC) ist, eine Verbindung auf dem zweiten Cluster (B) zwischen dem das erste FCM-Softwareelement repräsentierenden Proxy-FCM-Softwareelement (FCM 82') und dem zweiten Softwareelement (22) oder einem Proxy(22') davon aufzubauen.

9. Verfahren nach Anspruch 8, wobei die Anweisung des zweiten Streammanagers (53) dadurch getriggert wird, daß die Brücke (BC) eine Nachricht auf dem ersten Cluster empfängt, die angibt, daß die Verbindung durch den ersten Streammanager (103) abgeschlossen ist.

10. Verfahren nach Anspruch 6 und Anspruch 8, wobei das Weiterleiten des Funktionsaufrufs für die interne Verbindung des DCM-Softwareelements durch die Brücke dadurch getriggert wird, daß die Brücke (BC) eine Nachricht auf dem ersten Cluster empfängt, die angibt, daß die Verbindung durch den ersten Streammanager (103) abgeschlossen ist.

11. Verfahren nach einem der Ansprüche 8 bis 10, wobei der Abschluß der Herstellung einer Verbindung auf einem Cluster durch ein Ereignis ConnectionAdded angegeben wird, wobei dieses Ereignis nicht von einem Cluster zum anderen weitergeleitet wird.

12. Verfahren nach einem der Ansprüche 8 bis 11, mit den folgenden Schritten:
- Senden einer Nachricht zum Abwerfen einer über die Brücke hergestellten Verbindung zu einem dritten Streammanager (53) auf einem der Cluster (B), wobei der dritte Streammanager (53) zuvor als die abzuwerfende Verbindung haltend identifiziert wurde;
- Veranlassen, daß der dritte Streammanager (53) die entsprechende auf seinem lokalen Cluster hergestellte Verbindung abwirft;
- Veranlassen, daß die Brücke eine Verbindungskennung in der ursprünglichen Abwurfnachricht unter Verwendung ihrer Korrespondenztabelle aktualisiert;
- Veranlassen, daß die Brücke (BC) die Abwurfnachricht zu einem vierten Streammanager auf dem anderen Cluster (C) weiterleitet, wobei der Streammanager durch die Aktualisierung identifiziert wurde.

13. Verfahren nach einem der Ansprüche 8 bis 11, mit den folgenden Schritten:
- Senden einer Nachricht zum Abwerfen einer über die Brücke hergestellten Verbindung von einem Cluster zu einem dritten Streammanager (53) in einem Portal, wobei der dritte Streamnanager (53) zuvor als die abzuwerfende Verbindung haltend identifiziert wurde;
- Veranlassen, daß die Brücke eine Verbindungskennung in der urs-pxünglichen Abwurfnachricht unter Verwendung ihrer Korrespondenztabelle aktualisiert;
- Bewirken, daß die Brücke (BC) die Abwurfnachricht zu einem vierten Streammanager auf dem anderen Cluster (C) weiterleitet, wobei der Streammanager durch die Aktualisierung identifiziert wurde;
- Bewirken, daß der vierte Streammanager das Abwerfen der Verbindung auf beiden Clustern triggert.

14. Brückeneinrichtung (AB, BC) zum Verbinden eines ersten HAVi-Eincichtungsclusters mit einem zweiten HAVi-Einrichtungscluster, wobei, die Einrichtung ein erstes Portal (3, 5) zur Verbindung mit dem ersten Cluster und ein zweites Portal zur Verbindung mit dem zweiten Cluster (4, 7) umfaßt, wobei die Brücke dafür ausgelegt ist, Softwareelemente (21, 22, 81, 82) auf einem Cluster durch Proxy-Softwareelemente (21', 21", 22', 22", 81', 81", 82', 82"), die auf dem anderen Cluster sichtbar sind, zu repräsentieren, **dadurch gekennzeichnet, daß** sie ferner Mittel zum Erzeugen von Datenstrukturen umfaßt, die die Proxy-Softwareelemente beschreiben, wobei die Datenstrukturen mindestens eine Kennung der Brücke oder des Portals umfassen, die eine Kennung in der ursprünglichen Datenstruktur des durch das Proxy-Softwareelement repräsentierten ursprünglichen Softwareelements ersetzt.

15. Einrichtung nach Anspruch 14, **dadurch gekennzeichnet, daß** sie ferner Mittel zum Analysieren von Anforderungen von Datenstrukturen umfaßt, die von einem Softwareelement auf dem ersten Cluster empfangen werden und an ein Softwareelement des zweiten Clusters adressiert sind, wobei das Softwareelement des zweiten Clusters durch ein Proxy-Softwareelement auf dem ersten Cluster repräsentiert wird, und zum selektiven Weiterleiten einer Anforderung zu dem Softwareelement des zweiten Clusters oder zum Reagieren auf die Anforderung anstelle des Softwareelements des zweiten Clusters, wobei das selektive Weiterleiten oder Reagieren als Reaktion auf einen in der angeforderten Datenstruktur anwesenden Softwarcelementkennungstyp erfolgt.

16. Einrichtung nach einem der Ansprüche 14 oder 15, ferner mit Mitteln (33, 43, 53, 73) zum Detektieren einer neuen Verbindung zwischen einem Softwareelement einer mit einem Cluster verbundenen Einrichtung und einem auf dem einen Cluster sichtbaren Proxy-Softwareelement und zum Triggern der Herstellens einer Verbindung auf einem anderen Cluster auf dem Weg zu dem Softwareelement, das durch das Proxy-Softwareelement repräsentiert wird, als Reaktion auf die Detektion.

## Revendications

1. Procédé de gestion d'un réseau comprenant un dispositif de pont (AB, resp. BC), ledit dispositif de pont comprenant un premier portail connecté à une première grappe HAVi (A, resp. B) et un second portail connecté à une seconde grappe HAVi (B, resp. C), **caractérisé par** les étapes suivantes :
représenter, par ledit premier portail, des éléments logiciels DCM et des éléments logiciels FCM présents sur ladite seconde grappe, par des éléments logiciels de serveur mandataire DCM et des éléments logiciels de serveur mandataire FCM, où l'identifiant d'élément logiciel, SEID, de chaque élément logiciel de serveur mandataire représenté sur ladite première grappe est construit en se basant sur l'identifiant unique global, GUID, du portail comprenant les éléments logiciels de serveur mandataire ;
représenter, par ledit second portail, des éléments logiciels DCM et des éléments logiciels FCM présents sur ladite première grappe, par des éléments logiciels DCM de serveur mandataire et des éléments logiciels FCM de serveur mandataire, où l'identifiant d'élément logiciel, SEID, de chaque élément logiciel de serveur mandataire représenté sur ladite seconde grappe est construit en se basant sur l'identifiant unique global, GUID, du portail comprenant les éléments logiciels de serveur mandataire ;
construire, dans ledit dispositif de pont, une table de correspondance entre des identifiants d'élément logiciel des éléments logiciels de serveur mandataire et des éléments logiciels qu'ils représentent, où la structure de données TargetID d'un FCM de serveur mandataire, respectivement un élément logiciel DCM de serveur mandataire est construit, comprenant l'identifiant unique global du portail contenant ce FCM de serveur mandataire, respectivement l'élément logiciel DCM de serveur mandataire.

2. Procédé selon la revendication 1, où un identifiant unique HAVi, HUID, structure de données d'un élément logiciel DCM ou FCM de serveur mandataire est construit, comprenant un identifiant unique global du portail contenant cet élément logiciel DCM ou FCM de serveur mandataire.

3. Procédé selon une des revendications 1 ou 2, où un premier appel de fonction effectué vers un élément logiciel FCM de serveur mandataire renvoie l'identifiant d'élément logiciel au DCM de serveur mandataire contenant le FCM de serveur mandataire.

4. Procédé selon une des revendications 1 à 3, où un second appel de fonction effectué vers un élément logiciel DCM de serveur mandataire renvoie les identifiants d'élément logiciel du FCM de serveur mandataire contenu dans le DCM de serveur mandataire.

5. Procédé selon une des revendications 1 à 4, où un troisième appel de fonction effectué vers des éléments logiciels FCM ou DCM de serveur mandataire renvoie l'identifiant unique HAVi correspondant de serveur mandataire, HUID, fourni par le pont.

6. Procédé selon une des revendications 1 à 5, comprenant l'étape de transmission d'un appel de fonction par le pont pour une requête à un élément logiciel DCM d'effectuer des connexions internes à partir d'une grappe d'origine sur laquelle l'élément logiciel DCM est représenté par un DCM de serveur mandataire vers une grappe de destination, où le pont modifie les identifiants d'élément logiciel valides sur la grappe d'origine compris dans l'appel de fonction en identifiants d'élément logiciel valides sur la grappe de destination, en utilisant la table de correspondance.

7. Procédé selon une des revendications 1 à 6, où les DCM de serveur mandataire et les FCM de serveur mandataire sont respectivement déclarés comme DCM_NON61883 et FCM_NON61883,

8. Procédé selon une des revendications 1 à 7, où l'établissement d'un flux par un élément logiciel de gestionnaire de flux comprend les étapes suivantes:
- envoyer un appel de fonction à un gestionnaire de flux (103) sur la première grappe (C), où l'appel de fonction demande l'établissement d'une connexion entre un premier élément logiciel FCM (82) sur la première grappe (C) et un second élément logiciel FCM (22) sur une autre grappe (A) ;
- établissement par l'élément logiciel de gestionnaire de flux d'une connexion entre le premier élément logiciel FCM (82) et le FCM de serveur mandataire (22") du second élément logiciel FCM (22) ;
- ordonner à un second gestionnaire de flux (53), faisant partie du pont (BC), d'établir une connexion sur la seconde grappe (B) entre l'élément logiciel FCM de serveur mandataire (FCM82') représentant le premier élément logiciel FCM et le second élément logiciel (22), ou un serveur mandataire (22') de celui-ci.

9. Procédé selon la revendication 8, où l'ordre du second gestionnaire de flux (53) est déclenché par la réception par le pont (BC) d'un message sur la première grappe indiquant que la connexion par le premier gestionnaire de flux (103) est terminée.

10. Procédé selon la revendication 6 et la revendication 8, où la transmission par le pont de l'appel de fonction pour une connexion interne d'élément logiciel DCM est déclenchée par la réception par le pont (BC) d'un message sur la première grappe indiquant que la connexion par le premier gestionnaire de flux (103) est terminée.

11. Procédé selon une des revendications 8 à 10, où l'achèvement de l'établissement d'une connexion sur une grappe est indiqué par un évènement ConnectionAdded, cet évènement n'étant pas transmis d'une grappe à l'autre.

12. Procédé selon une des revendications 8 à 11, comprenant les étapes suivantes :
- envoyer un message pour abandonner une connexion effectuée sur le pont à un troisième gestionnaire de flux (53) sur une des grappes (B), où le troisième gestionnaire de flux (53) a précédemment été identifié comme maintenant la connexion à abandonner ;
- abandon par le troisième gestionnaire de flux (53) de la connexion correspondante effectuée sur sa grappe locale ;
- mise à jour par le pont d'un identifiant de connexion dans le message d'abandon d'origine en utilisant sa table de correspondance;
- transmission par le pont (BC) du message d'abandon à un quatrième gestionnaire de flux sur l'autre grappe (C), où le gestionnaire de flux a été identifié par la mise à jour.

13. Procédé selon une des revendications 8 à 11, comprenant les étapes suivantes:
- envoyer, à partir d'une grappe, un message pour abandonner une connexion effectuée sur le pont à un troisième gestionnaire de flux (53) dans un portail, où le troisième gestionnaire de flux (53) a précédemment été identifié comme maintenant la connexion à abandonner ;
- mise à jour par le pont d'un identifiant de connexion dans le message d'abandon d'origine en utilisant sa table de correspondance ;
- transmission par le pont (BC) du message d'abandon à un quatrième gestionnaire de flux sur l'autre grappe (C), où le gestionnaire de flux a été identifié par la mise à jour ;
- déclenchement par le quatrième gestionnaire de flux de l'abandon de la connexion sur les deux grappes

14. Dispositif de pont (AB, BC) pour connecter une première grappe de dispositifs HAVi à une seconde grappe de dispositifs HAVi, le dispositif comprenant un premier portail (3, 5) pour une connexion à la première grappe et un second portail pour une connexion à la seconde grappe (4, 7), le pont étant adapté pour représenter des éléments logiciels (21, 22, 81, 82) sur une grappe via des éléments logiciels de serveur mandataire (21', 21", 22', 22", 81', 81", 82', 82") visibles sur l'autre grappe, **caractérisé en ce qu'**il comprend en outre un moyen pour générer des structures de données descriptives des éléments logiciels de serveur mandataire, où les structures de données comprennent au moins un identifiant du pont ou du portail remplaçant un identifiant dans la structure de données d'origine de l'élément logiciel d'origine représenté par l'élément logiciel de serveur mandataire.

15. Dispositif selon la revendication 14, **caractérisé en ce qu'**il comprend en outre un moyen pour analyser des requêtes pour des structures de données reçues d'un élément logiciel sur la première grappe adressées à un élément logiciel de la seconde grappe, ledit élément logiciel de la seconde grappe étant représenté par un élément logiciel de serveur mandataire sur la première grappe, et pour la transmission sélective d'une requête vers l'élément logiciel de la seconde grappe ou la réponse à la requête à la place de l'élément logiciel de la seconde grappe, la transmission sélective ou la réponse répondant à un type d'identifiant d'élément logiciel présent dans la structure de données requise.

16. Dispositif selon une des revendications 14 ou 15, comprenant en outre un moyen (33, 43, 53, 73) pour détecter une nouvelle connexion entre un élément logiciel d'un dispositif connecté à une grappe et un élément logiciel de serveur mandataire visible sur la grappe en question, et en réponse à la détection, déclencher l'établissement d'une connexion, sur une autre grappe, sur la voie vers l'élément logiciel représenté par l'élément logiciel de serveur mandataire.
